# EUROPÄISCHE PATENTSCHRIFT

(11) **EP 1 080 316 B1**
(45) Veröffentlichungstag und Bekanntmachung des Hinweises auf die Patenterteilung: **07.08.2002**
(21) Anmeldenummer: 99926418.7
(22) Anmeldetag: 26.05.1999
(51) Int. Cl.: F16D 3/78

(54) **ELASTISCHE WELLENKUPPLUNG, INSBESONDERE FÜR LENKSÄULEN VON KRAFTFAHRZEUGEN**
ELASTIC SHAFT COUPLING ESPECIALLY FOR STEERING COLUMNS OF MOTOR VEHICLES
ACCOUPLEMENT D'ARBRE ELASTIQUE, NOTAMMENT POUR COLONNES DE DIRECTION DE VEHICULES AUTOMOBILES

(30) Priorität: 26.05.1998 DE 19823522
(43) Veröffentlichungstag der Anmeldung: 07.03.2001
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE); SCHNEIDER, Wilfried, D-84478 Waldkraiburg (DE)
(74) Vertreter: Goetz, Rupert, Dipl.-Ing.
(86) Internationale Anmeldenummer: EP9903622
(87) Internationale Veröffentlichungsnummer: WO9961811

(56) Entgegenhaltungen:
- DE-A- 3 205 070
- FR-A- 507 856
- US-A- 3 108 457
- US-A- 3 654 775

## Beschreibung

Die Erfindung betrifft eine elastische Wellenkupplung nach dem Oberbegriff des Anspruchs 1.

Bei einer bekannten Wellenkupplung dieser Gattung (DE 32 05 070 A1) ist die Gelenkscheibe zwischen zwei Böden angeordnet, die zu je einem Kupplungsteil gehören und je zwei einander diametral gegenüberliegende teilzylindrische Kragenabschnitte aufweisen, welche je einen entsprechenden Mantelflächenabschnitt der Gelenkscheibe schützend überlagern. Dadurch ist die Gelenkscheibe zwar teilweise gegen Einwirkung von Strahlungswärme geschützt, zugleich aber, beispielsweise im Motorraum eines Kraftfahrzeugs, einem möglichen Wärmestau ausgesetzt, da beide Stirnseiten der Gelenkscheibe von den Böden, zwischen denen sie angeordnet ist großenteils abgedeckt sind.

Bei einer anderen bekannten elastischen Wellenkupplung (US-PS 3,878,695) ist eines der beiden Kupplungsteile ein beidseitig offenes Rohrstück, das an einem Ende gabelförmig als Bestandteil eines Kreuzzapfengelenks ausgebildet ist und mit seinem anderen Endbereich ein Wellenende umschließt, das ein zweites Kupplungsteil bildet und mit dem ersten durch eine Elastomerhülse verbunden ist. Um eine Drehmomentübertragung zu ermöglichen, ist bei kreiszylindrischer Gestaltung der beiden Kupplungsteile die zwischen ihnen angeordnete Elastomerhülse an beide anvulkanisiert; alternativ haben beide Kupplungsteile einen nichtkreisförmigen, beispielsweise ovalen Querschnitt. Um zu verhindern, daß die beiden Kupplungsteile sich in axialer Richtung voneinander lösen, und um das von der Elastomerhülse zu'übertragende Drehmoment zu begrenzen, können beide zusätzlich durch eine splintartige Anordnung miteinander verbunden sein, die nur begrenzte axiale Relativbewegungen und Relativdrehungen der beiden Kupplungsteile zuläßt. Diese bekannte Wellenkupplung ist nur bedingt geeignet, im Motorraum eines Kraftfahrzeugs angeordnet zu werden, weil auf die beiden Kupplungsstücke einwirkende Strahlungshitze zu einem wesentlichen Teil auf die Elastomerhülse übertragen wird und deren Lebensdauer erheblich vermindern kann.

Der Erfindung liegt deshalb die Aufgabe zugrunde, eine elastische Wellenkupplung, insbesondere für Lenksäulen von Kraftfahrzeugen, derart zu gestalten, daß sie weniger hitzeempfindlich ist.

Die Aufgabe ist erfindungsgemäß mit den Merkmalen des Anspruchs 1 gelöst. Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert.

Es zeigen:
- Fig.1: einen Lenkwellenabschnitt mit einer ersten erfindungsgemäßen Wellenkupplung in perspektivischer Vorderansicht,
- Fig.2: den selben Lenkwellenabschnitt in ebenfalls perspektivischer Seitenansicht in Richtung des Pfeils II in Fig.1, teilweise aufgeschnitten,
- Fig.3: Abschnitte von Kupplungsteilen der in Fig.1 und 2 dargestellten Wellenkupplung in stark vergrößerter perspektivischer Ansicht,
- Fig.4: eine zu den Kupplungsteilen gemäß Fig.3 passende Gelenkscheibe, ebenfalls in perspektivischer Ansicht,
- Fig.4A: die zu Fig.4 gehörige Draufsicht,
- Fig.5: ein Kupplungsteil einer alternativen erfindungsgemäßen Wellenkupplung,
- Fig.6: eine andere Ausführungsform eines Lenkwellenabschnittes mit erfindungsgemäßer Wellenkupplung in einer der Fig.1 ähnlichen perspektivischen Ansicht, und
- Fig.7: Abschnitte von Kupplungsteilen einer weiteren erfindungsgemäßen Wellenkupplung in einer der Fig.3 ähnlichen perspektivischen Ansicht.

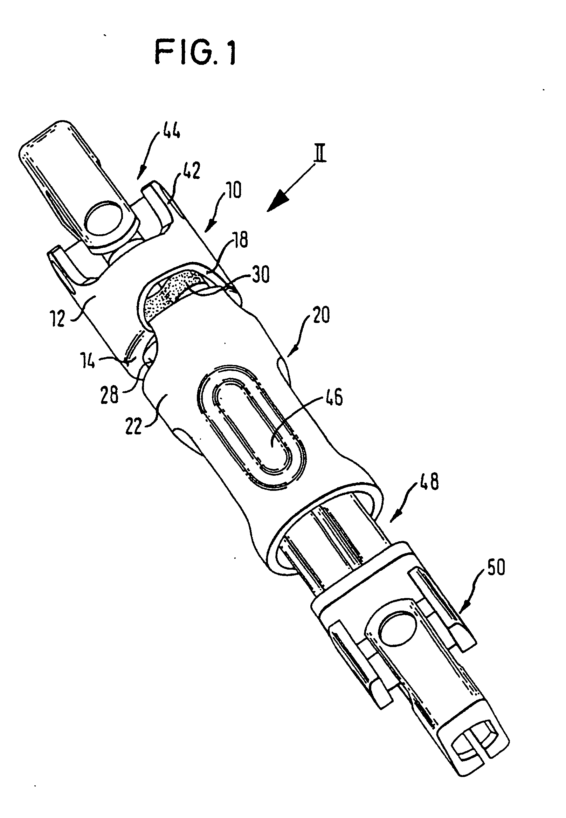

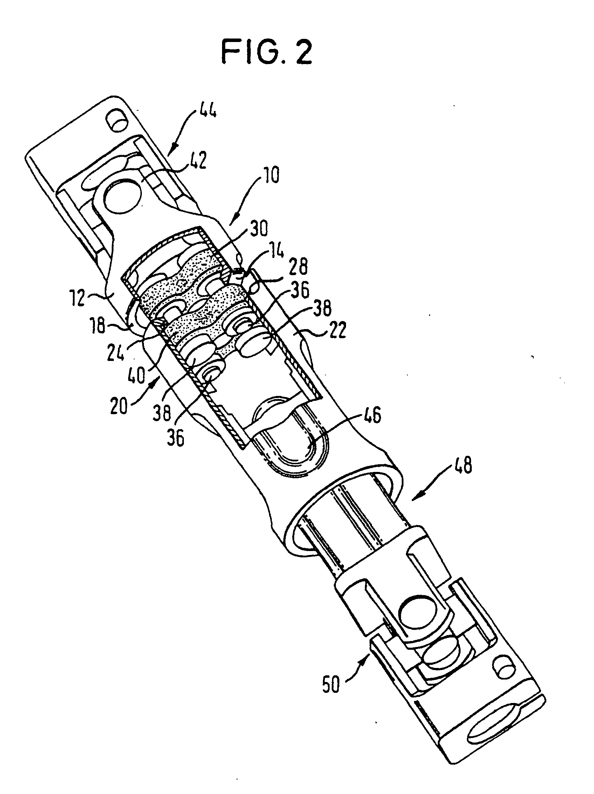

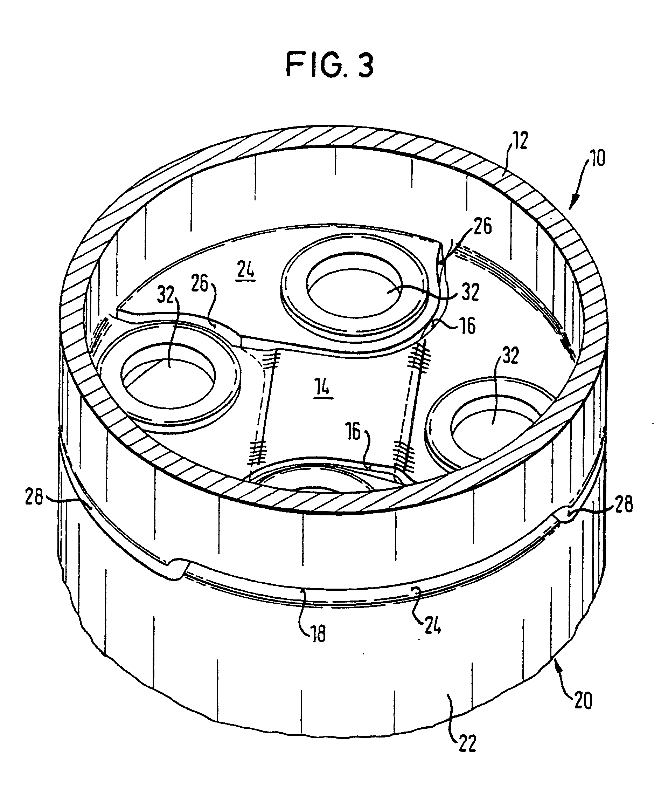

In Fig.1 und 2 ist ein Lenkwellenabschnitt dargestellt, der ein topfförmiges erstes Kupplungsteil 10 mit einem kreiszylindrischen Rohrstück 12 und einem Boden 14 aufweist. Der Boden 14 hat zwei einander diametral gegenüberliegende Bodenaussparungen 16 und ist, wie aus Fig.3 ersichtlich, in einem mittleren Bereich zwischen diesen Bodenaussparungen 16 parallel zu sich selbst einwärts gekröpft, also in das Rohrstück 12 hinein axial versetzt. Das Rohrstück 12 hat zwei entsprechend angeordnete, also einander ebenfalls diametral gegenüberliegende Randaussparungen 18, die sich an je eine der Bodenaussparungen 16 anschließen.

Dem ersten Kupplungsteil 10 ist ein ebenfalls topfförmiges zweites Kupplungsteil 20 zugeordnet, das ein kreiszylindrisches Rohrstück 22 und einen Boden 24 aufweist. Dieser Boden 24 kann dem Boden 14 völlig gleich sein. Bei dem in Fig.1 bis 3 dargestellten Ausführungsbeispiel hat er ebenfalls zwei einander diametral gegenüberliegende Bodenaussparungen 26 und ist ebenfalls in einem mittleren Bereich zwischen den Bodenaussparungen 26 parallel zu sich selbst in das Rohrstück 22 hinein versetzt. Die in ihrer ursprünglichen Ebene verbleibenden Bereiche des Bodens 24 des zweiten Kupplungsteils 20 sind zu je einer der Bodenaussparungen 16 des ersten Kupplungsteils 10 im wesentlichen komplementär, während die Bodenaussparungen 26 des zweiten Kupplungsteils 20 zu den ebenen Bereichen des Bodens 14 des ersten Kupplungsteils 10 im wesentlichen komplementär sind. Das Rohrstück 22 hat zwei einander diametral gegenüberliegende Randaussparungen 28, die sich an je eine der Bodenaussparungen 16 anschließen.

Die beiden Kupplungsteile 10 und 20 lassen sich somit gemäß Fig.3 gleichachsig zueinander derart anordnen, daß der Boden 14 in die Bodenaussparungen 26, und der Boden 24 in die Bodenaussparungen 16 mit Spiel eingreift. Dabei überkreuzen sich die einwärts gekröpften Bereiche der beiden Böden 14 und 24 und jedes der Rohrstücke 12 und 22 greift axial in die Randaussparungen 28 bzw. 18 des jeweils anderen Rohrstücks 22 bzw. 12 mit Spiel ein. Die Spiele sind so bemessen, daß die beiden Kupplungsteile 10 und 20 begrenzt gegeneinander drehbar und kippbar sind. Die beiden Böden 14 und 24 haben je zwei einander diametral gegenüberliegende Befestigungslöcher 32.

Innerhalb des ersten Rohrstücks 12 ist eine erste Gelenkscheibe 30 üblicher Bauart angeordnet, die im wesentlichen aus einem Elastomerkörper mit vier in Abständen von 90° eingebetteten Buchsen 34 besteht. Die Buchsen 34 sind paarweise von in den Elastomerkörper eingebetteten, in Fig.1 bis 6 nicht sichtbaren Fadenpaketen umschlungen. Diese erste Gelenkscheibe 30 ist an der vom zweiten Kupplungsteil 20 abgewandten, also inneren, Seite des Bodens 14 des ersten Kupplungsteils 10 angeordnet, und zwei ihrer Buchsen 34 sind mit je einem ersten Befestigungselement 36, beispielsweise Niet, am Boden 14 des ersten Kupplungsteils 10 befestigt. Die beiden übrigen Buchsen 34 der ersten Gelenkscheibe 30 sind mit je einem zweiten Befestigungselement 38, beispielsweise ebenfalls je einem Niet, der sich berührungsfrei durch je eine der Bodenaussparungen 16 hindurcherstreckt, am Boden 24 des zweiten Kupplungsteils 20 befestigt.

Innerhalb des zweiten Kupplungsteils 20, an der vom ersten Kupplungsteil 10 abgewandten Seite von dessen Boden 24, ist eine zweite Gelenkscheibe 40 angeordnet. Auch von dieser Gelenkscheibe 40 sind zwei einander diametral gegenüberliegende Buchsen 34 mittels je eines der beiden ersten Befestigungselemente 36 am Boden 14 des ersten Kupplungsteils 10 befestigt. Zu diesem Zweck erstrecken sich die beiden ersten Befestigungselemente 36 berührungsfrei durch je eine der Bodenaussparungen 26 des zweiten Kupplungsteils 20 hindurch. Die beiden übrigen Buchsen 34 der zweiten Gelenkscheibe 40 sind mittels je eines der beiden zweiten Befestigungselemente 38 am Boden 24 des zweiten Kupplungsteils 20 befestigt.

Jedes der beiden ersten Befestigungselemente 36 steckt spielfrei, vorzugsweise mit Preßsitz, in einem der Befestigungslöcher 32 des ersten Bodens 14, und entsprechend steckt jedes der zweiten Befestigungselemente 38 spielfrei in je einem der Befestigungslöcher 32 des zweiten Bodens 24. Sämtliche Befestigungselemente 36 und 38 erstrecken sich durch beide Gelenkscheiben 30 und 40 hindurch. Beide Gelenkscheiben 30 und 40 sind vom zugehörigen Rohrstück 12 bzw. 22 mit radialem Spiel umschlossen und dadurch gegen Wärmeeinwirkung von außen geschützt.

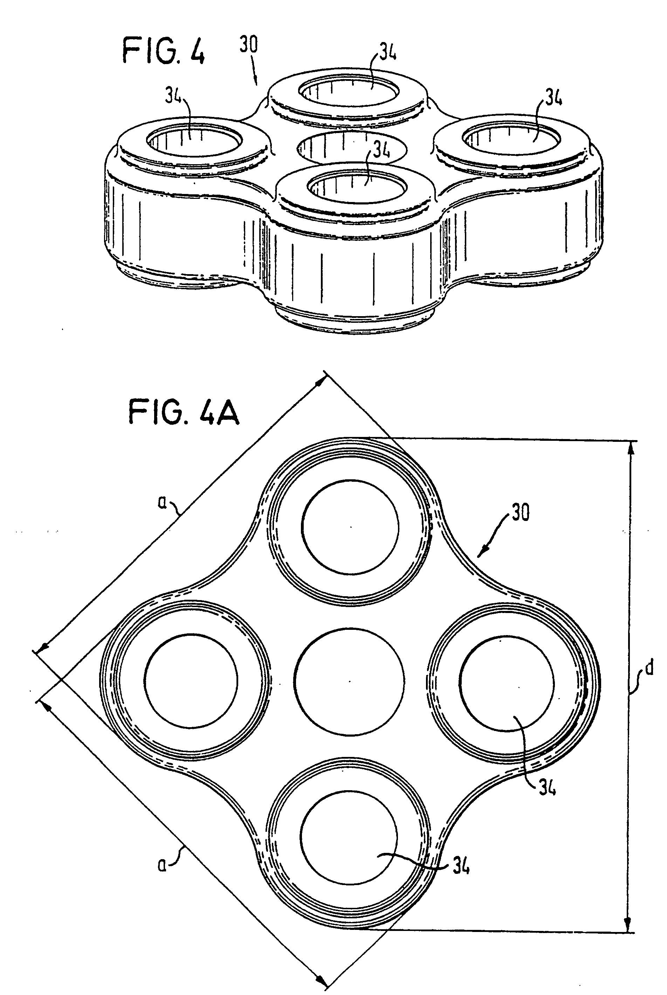

Die Gelenkscheiben 30 und 40 sind, wie in Fig.4 anhand der Gelenkscheibe 30 dargestellt, in den Bereichen zwischen den Buchsen 34 durch konkave Kreisbogen begrenzt und lassen deshalb innerhalb der Rohrstücke 12 und 22 ausreichend Platz für deren axiale Durchlüftung frei. Allgemein ausgedrückt, hat jede der Gelenkscheiben 30 und 40 einen polygonartigen Umriß. Die Gelenkscheibe gemäß Fig.4A paßt in ein gedachtes Quadrat, oder hat mit anderen Worten ein umschriebenes Quadrat, dessen Seitenlänge a deutlich kleiner ist als der Durchmesser d der Gelenkscheibe. Die Breite der Randaussparungen 18 und 28 ist vorzugsweise etwas größer als die Seitenlänge a der Gelenkscheiben 30 bzw. 40, so daß diese sich seitlich in das zugehörige Rohrstück 12 bzw. 22 einschieben läßt, wenn eine Montage in axialer Richtung schwierig oder sogar unmöglich ist.

Die Bodenaussparungen 16 und 26 der beiden Kupplungsteile 10 und 20 haben in Verbindung mit der polygonartigen Form der Gelenkscheiben 30 und 40 den Vorteil, daß der gesamte in Fig.1 und 2 dargestellte Lenkwellenabschnitt wie ein Kamin wirkt, in dem bei Erwärmung ein Luftstrom entsteht. Infolgedessen wird beispielsweise von einem Motorblock ausstrahlende Wärme alsbald aus dem Lenkwellenabschnitt abgeführt, ohne daß die Gelenkscheiben 30 und 40 übermäßig erhitzt werden.

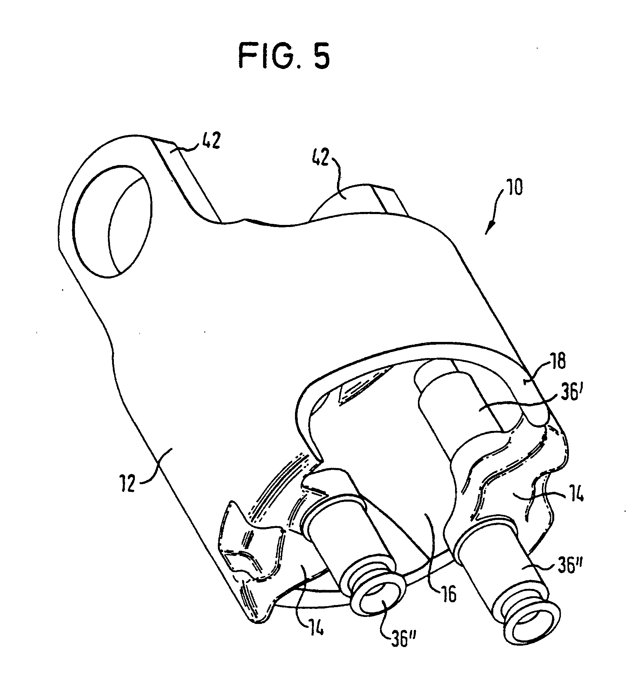

In Fig.5 ist eine Abwandlung eines ersten Kupplungsteils 10 dargestellt, das ebenso als zweites Kupplungsteil verwendet werden könnte. Die Abwandlung besteht im wesentlichen darin, daß die ersten Befestigungselemente 36 einstückig am Boden 14 angeformt und in je einen nach innen ragenden Abschnitt 36' und je einen nach außen ragenden Abschnitt 36" unterteilt sind. Die zusammengehörigen Abschnitte 36' und 36" sind im dargestellten Beispiel geringfügig in Drehrichtung gegeneinander versetzt parallel zueinander angeordnet; diese Anordnung hat gegenüber einer gleichachsigen Anordnung zusammengehöriger Abschnitte 36' und 36" den Vorteil, allzugroße Materialanhäufungen beim Druckgießen oder Fließpressen des Kupplungsteils 10 zu vermeiden. Wenn das in Fig.5 dargestellte Kupplungsteil als erstes Kupplungsteil 10 verwendet wird, dann wird die erste Gelenkscheibe 30 an den beiden nach innen ragenden Abschnitten 36' befestigt, während die zweite Gelenkscheibe 40 an den beiden nach außen ragenden Abschnitten 36" der Befestigungselemente befestigt wird.

Gemäß Fig. 1, 2, 5 und 6 hat das erste Kupplungsteil 10 einen von seinem Boden 14 abgewandten gabelförmigen Bereich 42, der Bestandteil eines ersten Kardangelenks 44 ist. Aus Fig.1 und 2 ist ferner ersichtlich, daß das zweite Kupplungsteil 20 in einem Abstand von seinem Boden 24 einen polygonartig verformten Bereich 46 aufweist, der Bestandteil eines Schiebegelenks 48 ist. An dieses schließt sich ein zweites Kardangelenk 50 an.

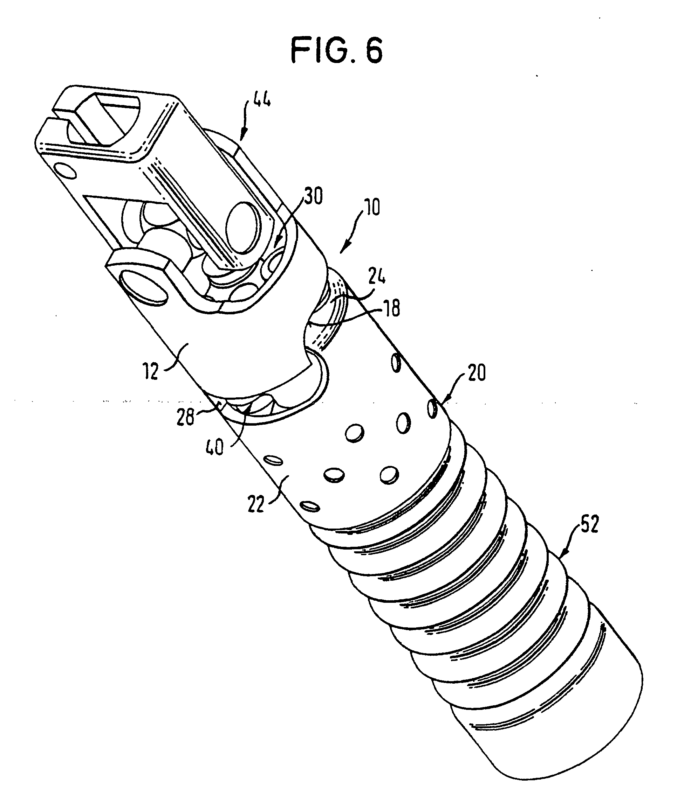

Der Lenkwellenabschnitt gemäß Fig.6 unterscheidet sich von dem in Fig.1 bis 3 dargestellten dadurch, daß anstelle des Schiebegelenks 48 ein axial verformbares und in gewissen Grenzen auch biegsames Wellrohr 52 vorgesehen ist.

Eine Wellenkupplung mit nur einer Gelenkscheibe läßt sich so herstellen, daß bei der Ausführungsform gemäß Fig.1 und 2 oder 6 eine der Gelenkscheiben 30 oder 40 weggelassen wird, ohne daß an der Anordnung der anderen etwas geändert wird.

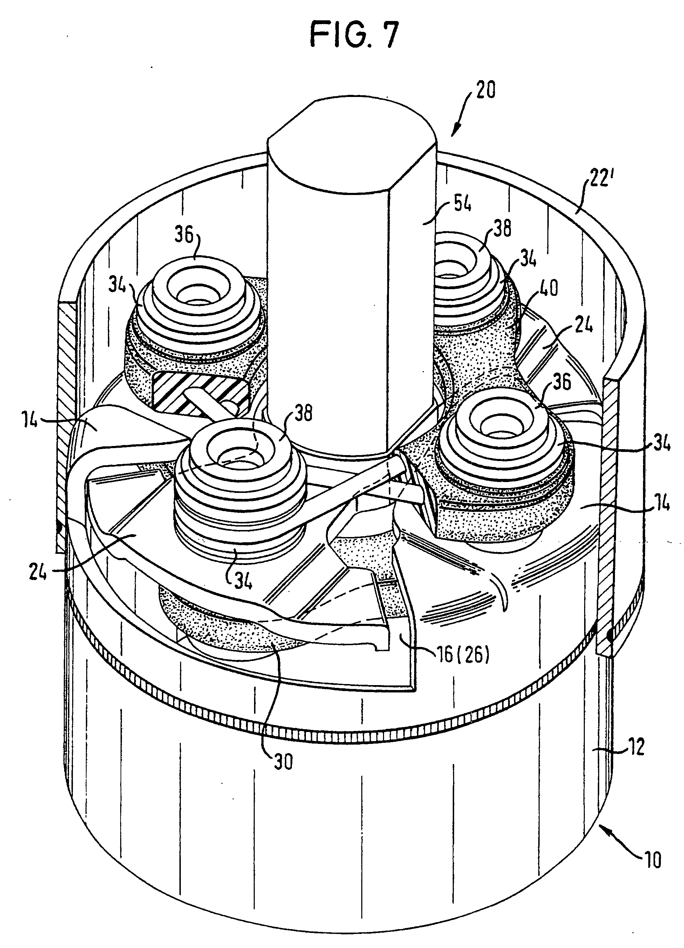

Bei der in fig.7 dargestellten Wellenkupplung ähnelt das - in diesem Fall unten angeordnete - erste Kupplungsteil 10 dem bisher beschriebenen. An seinem Rohrstück 12 ist jedoch ein Rohrstück 22' befestigt, beispielsweise durch Schweißen, das einen Abschnitt des zweiten Kupplungsteils 20 und die zweite Gelenkscheibe 40 mit radialem Spiel umschließt und letztere gegen Wärmestrahlung abschirmt. Das zweite Kupplungsteil 20 hat kein eigenes Rohrstück. Der Boden 24 des zweiten Kupplungsteils 20 ist an einem drehmomentübertragenden Wellenstück 54 befestigt, das Bestandteil eines Schiebegelenks sein kann.

## Patentansprüche

1. Elastische Wellenkupplung, insbesondere für Lenksäulen von Kraftfahrzeugen, mit
- einem ersten Kupplungsteil (10) und einem zweiten Kupplungsteil (20), die einen ersten bzw. zweiten Boden (14;24) mit je mindestens einer Bodenaussparung (16;26) aufweisen, und
- einer Gelenkscheibe (30;40) die mit ersten Befestigungselementen (36) am ersten Kupplungsteil (10) und mit zweiten Befestigungselementen (38) am zweiten Kupplungsteil (20) befestigt ist, wobei
- die zweiten Befestigungselemente (38) sich berührungsfrei durch die Bodenaussparung (16) des ersten Kupplungsteils (10) hindurcherstrecken,
**dadurch gekennzeichnet, daß**
- die Böden (14;24) der Kupplungsteile (10;20) einander zugewandt sind, und
- die Gelenkscheibe (30) innerhalb eines Rohrstücks (12) angeordnet ist, das am ersten Kupplungsteil (10) ausgebildet und dem zweiten Kupplungsteil (20) abgewandt ist.

2. Wellenkupplung nach Anspruch 1,
**dadurch gekennzeichnet, daß**
- eine zweite Gelenkscheibe (40) innerhalb eines zweiten Rohrstücks (22) angeordnet ist, das am zweiten Kupplungsteil (20) ausgebildet und dem ersten Kupplungsteil (10) abgewandt ist, und
- die ersten Befestigungslemente (36) sich berührungsfrei durch die Bodenaussparung (26) des zweiten Kupplungsteils (20) hindurcherstrecken.

3. Wellenkupplung nach Anspruch 2,
**dadurch gekennzeichnet, daß** die beiden Rohrstücke (12;22) je mindestens eine Randaussparung (18;28) aufweisen, in die das andere Rohrstück (22;12) mit einem Spiel eingreift, das nur eine begrenzte Relativdrehung der beiden Kupplungsstücke (10;20) ermöglicht.

4. Wellenkupplung nach Anspruch 3,
**dadurch gekennzeichnet, daß** die Randaussparung (18;28) so bemessen ist, daß die zugehörige Gelenkscheibe (30;40) sich durch die Randaussparung (18;28) hindurch in das zugehörige Rohrstück (12;22) einbringen läßt.

5. Wellenkupplung nach Anspruch 1,
**dadurch gekennzeichnet, daß**
- eine zweite Gelenkscheibe (40) innerhalb eines zweiten Rohrstücks (22') angeordnet ist, das am ersten Kupplungsteil (10) ausgebildet und dem zweiten Kupplungsteil (20) zugewandt ist, und
- die ersten Befestigungselemente (36) sich berührungsfrei durch die Bodenaussparung (26) des zweiten Kupplungsteils (20) hindurcherstrecken.

6. Wellenkupplung nach einem der Ansprüche 1 bis 5,
**dadurch gekennzeichnet, daß** der Boden (14;24) jedes Kupplungsteils (10,20) in die Bodenaussparung (16;26) des anderen Kupplungsteils (20;10) mit Spiel eingreift.

7. Wellenkupplung nach einem der Ansprüche 1 bis 6,
**dadurch gekennzeichnet, daß** die Befestigungselemente (36;38) am Boden (14;24) des jeweils zugehörigen Kupplungsteils (10;20) einstückig angeformt sind.

8. Wellenkupplung nach einem der Ansprüche 1 bis 7,
**dadurch gekennzeichnet, daß** die bzw. jede Gelenkscheibe (30;40) einen polygonartigen Umriß hat.

9. Wellenkupplung nach einem der Ansprüche 1 bis 8,
**dadurch gekennzeichnet, daß** eines der beiden Kupplungsteile (10) in einem von seinem Boden (14) abgewandten Bereich (42) als Bestandteil eines Kardangelenks (44) ausgebildet ist.

10. Wellenkupplung nach einem der Ansprüche 1 bis 9,
**dadurch gekennzeichnet, daß** eines der beiden Kupplungsteile (20) in einem von seinem Boden (24) abgewandten Bereich (46) als Bestandteil eines Schiebegelenks (48) ausgebildet ist.

## Claims

1. A flexible shaft coupling, especially for steering columns of motor vehicles, comprising
- a first coupling member (10) and a second coupling member (20) having a first and a second bottom (14; 24), respectively, with at least one bottom opening (16; 26) each, and
- a joint disk (30; 40) fastened by means of first fastening elements (36) to the first coupling member (10) and by means of second fastening elements (38) to the second coupling member (20), wherein
- the second fastening elements (38) extend contact-free through the bottom opening (16) in the first coupling member (10),
**characterised in that**
- the bottoms (14; 24) of the coupling members (10; 20) face each other, and
- the joint disk (30) is arranged inside a tube piece (12) which is formed on the first coupling member (10) and faces away from the second coupling member (20).

2. The shaft coupling according to claim 1,
**characterised in that**
- a second joint disk (40) is arranged inside a second tube piece (22) which is formed on the second coupling member (20) and faces away from the first coupling member (10), and
- the first fastening elements (36) extend contact-free through the bottom opening (26) in the second coupling member (20).

3. The shaft coupling according to claim 2,
**characterised in that** each of the two tube pieces (12; 22) comprises at least one marginal opening (18; 28) into which the other tube piece (22; 12) engages with a clearance allowing only a limited relative rotation of the two coupling members (10; 20).

4. The shaft coupling according to claim 3,
**characterised in that** the marginal opening (18; 28) is dimensioned such that it enables the associated joint disk (30; 40) to be introduced into the associated tube piece (12; 22) through the marginal opening (18; 28).

5. The shaft coupling according to claim 1,
**characterised in that**
- a second joint disk (40) is arranged inside the second tube piece (22') which is formed on the first coupling member (10) and faces the second coupling member (20), and
- the first fastening elements (36) extend contact-free through the bottom opening (26) in the second coupling member (20).

6. The shaft coupling according to one of claims 1 to 5, **characterised in that** the bottom (14; 24) of each coupling member (10, 20) engages with clearance into the bottom opening (16; 26) of the other coupling member (20; 10).

7. The shaft coupling according to one of claims 1 to 6, **characterised in that** the fastening elements (36; 38) are formed integrally with the bottom (14; 24) of the respectively associated coupling member (10; 20).

8. The shaft coupling according to one of claims 1 to 7, **characterised in that** the or each joint disk (30; 40) has a polygon-like outline.

9. The shaft coupling according to one of claims 1 to 8, **characterised in that** in a region (42) facing away from its bottom (14) one of the two coupling members (10) is formed as a component of a universal joint (44).

10. The shaft coupling according to one of claims 1 to 9, **characterised in that** in a region (46) facing away from its bottom (24) one of the two coupling members (20) is formed as a component of a sliding joint (48).

## Revendications

1. Accouplement d'arbre élastique, en particulier pour des colonnes de direction de véhicules automobiles, comprenant
- une première partie d'accouplement (10) et une deuxième partie d'accouplement (20) qui présentent chacune un premier, respectivement un deuxième fond (14; 24) avec chacun au moins un évidement de fond (16; 26) et
- un joint universel élastique (30; 40) qui est fixé avec des premiers éléments de fixation (36) à la première partie d'accouplement (10) et avec des deuxièmes éléments de fixation (38) à la deuxième partie d'accouplement le (20),
- les deuxièmes éléments de fixation (38) s'étendant sans contact à travers l'évidement de fond (16) de la première partie d'accouplement (10),
**caractérisé en ce que**
- les fonds (14; 24) des parties d'accouplement (10; 20) sont tournés l'un vers l'autre et
- le joint universel élastique (30) est disposé à l'intérieur d'une pièce tubulaire (12) qui est formée sur la première partie d'accouplement (10) et est située à l'opposé de la deuxième partie d'accouplement (20).

2. Accouplement d'arbre selon la revendication 1,
**caractérisé en ce que**
- un deuxième joint universel élastique (40) est disposé à l'intérieur d'une deuxième pièce tubulaire (22) qui est formée sur la deuxième partie d'accouplement (20) et est située à l'opposé de la première partie d'accouplement (10) et
- les premiers éléments de fixation (36) s'étendent sans contact à travers l'évidement du fond (26) de la deuxième partie d'accouplement (20).

3. Accouplement d'arbre selon la revendication 2,
**caractérisé en ce que** les deux pièces tubulaires (12; 22) présentent chacune au moins un évidement périphérique (18; 28) dans lequel l'autre pièce tubulaire (22; 12) pénètre avec un jeu qui ne permet qu'une rotation relative limitée des deux parties d'accouplement (10; 20).

4. Accouplement d'arbre selon la revendication 3, **caractérisé en ce que** l'évidement périphérique (18; 28) est dimensionné de telle façon que le joint universel élastique correspondant (30; 40) puisse être introduit par l'évidement périphérique (18; 28) dans la pièce tubulaire associée (12; 22).

5. Accouplement d'arbre selon la revendication 1,
**caractérisé en ce que**
- un deuxième joint universel élastique (40) est disposé à l'intérieur d'une deuxième pièce tubulaire (22') qui est formée sur 1a première partie d'accouplement (10) et est tournée vers la deuxième partie d'accouplement (20) et
- les premiers éléments de fixation (36) s'étendent sans contact à travers l'évidement du fond (26) de la deuxième partie d'accouplement (20).

6. Accouplement d'arbre selon l'une quelconque des revendications 1 à 5, **caractérisé en ce que** le fond (14; 24) de chaque partie d'accouplement (10, 20) pénètre dans l'évidement du fond (16; 26) de l'autre partie d'accouplement (20;10) avec jeu.

7. Accouplement d'arbre selon l'une quelconque des revendications 1 à 6, **caractérisé en ce que** les éléments de fixation (36; 38) sont formés d'une seule pièce au fond (14; 24) de la partie d'accouplement respectivement associée (10; 20).

8. Accouplement d'arbre selon l'une quelconque des revendications 1 à 7, **caractérisé en ce que** les, respectivement chaque joint universel élastique (30; 40) présente un contour polygonal.

9. Accouplement d'arbre selon l'une quelconque des revendications 1 à 8, **caractérisé en ce qu'**une des deux parties d'accouplement (10) est conformée en élément d'un joint de cardan (44) dans une zone située à l'opposé de son fond (14).

10. Accouplement d'arbre selon l'une quelconque des revendications 1 à 9, **caractérisé en ce qu'**une des deux parties d'accouplement (20) est conformée en élément d'un joint coulissant (48) dans une zone située à l'opposé de son fond (24).
